## Europäisches Patentamt

(19) **European Patent Office**

**Office européen des brevets**

(11) Publication number: **0 099 054**
**B1**

(12) **EUROPEAN PATENT SPECIFICATION**

(45) Date of publication of patent specification: **28.01.87**

(51) Int. Cl.⁴: **G 03 G 15/00**, G 03 B 27/58, B 65 H 5/00, B 65 H 29/00

(21) Application number: **83106578.4**

(22) Date of filing: **05.07.83**

(54) **Method of conveying image sheet.**

(30) Priority: **06.07.82 JP 117381/82**

(43) Date of publication of application:
**25.01.84 Bulletin 84/04**

(45) Publication of the grant of the patent:
**28.01.87 Bulletin 87/05**

(84) Designated Contracting States:
**DE FR NL**

(56) References cited:
**EP-A-0 077 678**
**DE-A-2 446 239**
**GB-A-1 261 165**
**GB-A-1 477 854**
**US-A-2 342 571**
**US-A-3 795 301**

(73) Proprietor: **FUJI PHOTO FILM CO., LTD.**
**210 Nakanuma Minamiashigara-shi**
**Kanagawa-ken, 250-01 (JP)**

(72) Inventor: **Tamura, Kaoru c/o Fuji Photo Film Co., Ltd.**
**798 Miyanodai Kaisei-machi**
**Ashigarakami-gun Kanagawa-ken (JP)**
Inventor: **Takano, Masao c/o Fuji Photo Film Co., Ltd.**
**798 Miyanodai Kaisei-machi**
**Ashigarakami-gun Kanagawa-ken (JP)**

(74) Representative: **Klunker, Hans-Friedrich, Dr. et al**
**Patentanwälte Klunker . Schmitt-Nilson . Hirsch**
**Winzererstrasse 106**
**D-8000 München 40 (DE)**

Courier Press, Leamington Spa, England.

## Description

This invention relates to a method of conveying an image sheet used for recording and reproducing an image. By "image sheet" is meant a sheet-like material comprising a substrate layer and an image recording layer such as stimulable phosphor layer or photoconductive layer provided on the substrate, for example, a stimulable phosphor sheet for recording a radiation image therein (as described, e.g. in US—A—4,236,078, 4,239,968, 4,350,893, 4,368,390 and 4,380,702, U.S. Patent Appln. No. 156,520, Japanese Unexamined Patent Publication No. 57(1982)—24900), electrophotographic sheet or the like.

After an image is recorded on an image sheet at a recording section, the image sheet is conveyed to a reproducing section for processing such as for transfer or read-out of the recorded image (this processing is broadly referred to as reproducing). For this purpose, the system for recording and reproducing an image by use of the image sheet is provided with a conveying system for conveying the image sheet.

In order to minimize the size of the overall image recording and reproducing system or the portion of the apparatus incorporating the conveying system, the construction of the conveying system should desirably be simplified as much as possible. Further, in order to minimize the floor space occupied by the apparatus, the conveying system should desirably contain a vertical conveying portion in addition to or instead of a horizontal conveying portion so that the image sheet can be conveyed vertically. However, the conventional vertical conveying method requires a complicated mechanism for holding the image sheet on a conveying belt or the like, and is expensive.

Further, in the conveying of the aforesaid image sheet, in order to assure the reproduction of a high quality image from the image sheet, it is desired to prevent the surface of the image sheet on the image recording layer side (hereinafter referred to as the surface of the image sheet) from being scratched due to contact with any member of the conveying system and from being deteriorated due to pressure applied to the surface of the image sheet.

Further, in the system using the aforesaid image sheet, it is sometimes desired to conduct the image recording or reproduction with the surface of the image sheet facing transversely (i.e. by positioning the image sheet vertically) or facing down for the purpose of minimizing the size of the whole system to match the construction of the recording and reproducing sections for recording an image on the image sheet and reproducing the image therefrom. For example, if it is possible to convey the image sheet along the lower side of a conveying drum or an endless belt with the surface of the image sheet facing down so that the image sheet can be exposed, for example, to a radiation from below in a radiation image recording apparatus, it becomes possible to make the whole system compact and to freely design the construction of the system in various manners as desired.

US—A—3,795,301 discloses a magnetic conveying means for conveying sheet metal along the lower part of an endless belt. On the side of the inner surface of the endless belt adjacent to the lower path of the belt there is provided an electromagnet extending along the path of the belt. The electromagnet attracts the sheet metal and the endless belt interposed between the sheet metal and the electromagnet.

GB—A—1 261 165 discloses the use of a magnetized cylinder to convey flexible printing blankets containing magnetic material. The magnetized cylinder is comprised of a plurality of non-magnetic annular members supported adjacent each other along the axis of the cylinder. Within the cylinder a plurality of permanent magnets is provided. The flexible printing blankets contain a magnetic material.

DE—A—2 446 239 discloses a method for releasing a single image recording sheet from a cassette. Adjacent to the cassette a magnet is provided which attracts the recording sheet which carries in its outer periphery a magnetic material.

The above-mentioned apparatus for transferring sheet metal by using an electromagnetic can only convey the sheet metal along the lower part of the endless belt. If the sheet metal is to be conveyed over the entire travelling path of the endless belt, additional magnets must be provided. The system according to the above-mentioned GB—A is used for conveying flexible printing blankets which contain a magnetic material. The system cannot be used for image sheet for recording a radiation image therein.

The problem underlying the present invention is to provide a method for conveying an image sheet in accordance with the pre-characterizing part of claim 1, which allows to convey an image sheet in which the sheet is conveyed without being scratched or pressed on the surface thereof. The image sheet is intended to be conveyed vertically or with the surface thereof facing down along the lower side of a conveying means while the surface of the sheet does not contact any part of the conveying system.

In accordance with the characterizing part of claim 1 this problem is solved by providing a method for conveying an image sheet, wherein the image sheet comprises a substrate layer and an image recording layer formed on the substrate layer. At least a part of the substrate layer and at least a part of the conveying means are magnetically attracted to each other during conveying of the image sheet. The substrate layer is a magnetic material layer comprising a non-magnetic material and magnetic particles dispersed therein.

The substrate layer may be in any form insofar as it can support the image layer, which may be a stimulable phosphor layer or photoconductive layer, and is at least partially provided with magnetic properties. For example, the substrate layer may be a multi-layered type comprising a non-magnetic substrate such as an ordinary plastic film and a thin sheet made of a magnetic material such as iron, cobalt or nickel or a magnetic particle layer comprising a binder and magnetic particles dispersed therein, which is laid over at least a part of the non-magnetic substrate.

Alternatively, the substrate layer may be of the single layer type consisting of a magnetic material layer comprising a resin and magnetic particles dispersed therein. When a magnetic layer is provided at a part of the substrate, the magnetic layer may be positioned at an end of the image sheet or may be extended band-wise over the entire length of the image sheet.

By "magnet" is meant a material magnetically attracting a magnetic material. In general, the magnet should desirably exhibit a large coercive force to constitute a permanent magnet. However, it is also possible to employ an electromagnet and to excite the electromagnet by the application of an electric current only when the image sheet is to be conveyed.

In the present invention, since either one of the substrate layer of the image sheet and the conveying means such as belt or drum is at least partially provided with a magnetic material or a magnet and the other thereof is at least partially provided with a magnet, the image sheet can be conveyed vertically or with the surface of the image sheet facing down along the lower side of the conveying means without using a special construction for holding the image sheet on the conveying means. Further, since the image sheet can be conveyed without the surface thereof contacting any part of the conveying system, there is no risk of the surface of the image sheet being scratched or adversely affected by a pressing force of holding rollers. Further, the construction of the conveying system can be simplified, and the whole apparatus can be made compact.

Figure 1 is a sectional view showing an embodiment of the image sheet employed in the conveying method in accordance with the present invention,

Figure 2 is a sectional view showing another embodiment of the image sheet employed in the conveying method in accordance with the present invention,

Figure 3 is a schematic view showing the condition of vertically conveying the image sheet by using the conveying method in accordance with the present invention,

Figure 4 is a schematic view showing the condition of conveying the image sheet with the surface thereof facing down along the lower side of the conveying means, and

Figure 5 is a sectional schematic view showing a portion of a conveying system for feeding the image from an apparatus to another apparatus by using the conveying method in accordance with the present invention.

The present invention will hereinbelow be described in further detail with reference to the accompanying drawings.

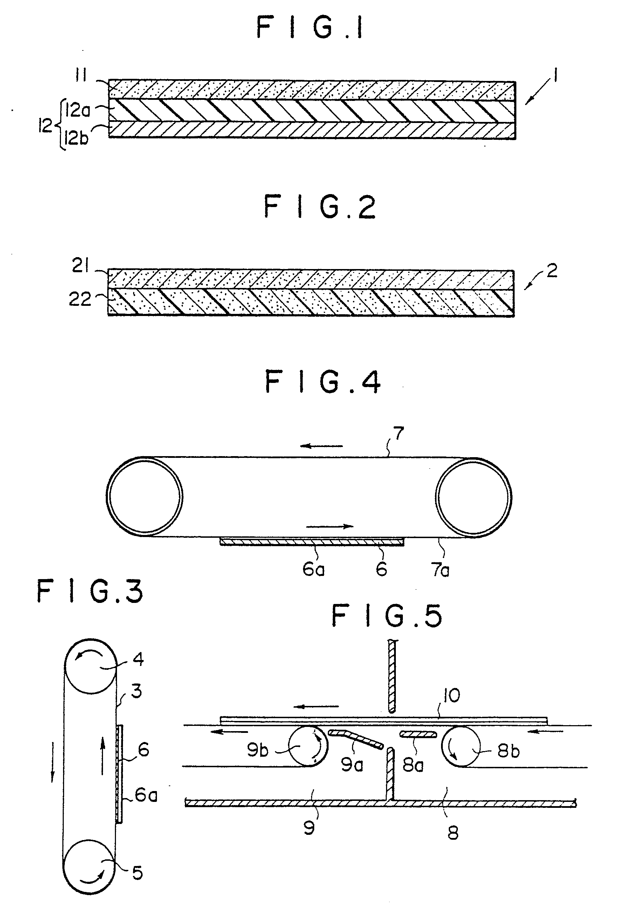

In Figure 1 showing an embodiment of the image sheet employed in the conveying method in accordance with the present invention, a stimulable phophor sheet 1 comprises a substrate layer 12 and a stimulable phosphor layer 11 formed on the substrate layer 12. The substrate layer 12 comprises a substrate 12a and a magnetic material layer 12b composed of a magnetizable ferromagnetic material and overlaid on the substrate 12a.

Figure 2 shows a stimulable phosphor sheet 2 having a substrate layer 22 of the single layer type. In the stimulable phosphor sheet 2, a stimulable phosphor layer 21 is formed on the magnetic material layer 22 comprising a resin and magnetic particles dispersed therein.

The image sheet employed in the conveying method of the present invention is not limited to the stimulable phosphor sheets 1 and 2 as shown in Figures 1 and 2. The image sheet broadly embraces electrophotographic materials as described above, lithgraphic films for printing, conventional X-ray films, and any other type of image sheets. Namely, the image sheet embraces any sheet-like material that is provided on the surface with an image recording layer for carrying an image recorded therein and reproducing a visible image therefrom (by "reproducing" is broadly meant any processing conducted for ultimately reproducing the image into a visible image, such as transfer, read-out, development or fixing) and that should be prevented at least from being scratched on the surface.

In the present invention, at least a part of the substrate layer 12 of the image sheet 1 or the substrate layer 22 of the image sheet 2 is provided with a magnetic material, and at least a part of the surface of the conveying means such as belt or drum for conveying the image sheet 1 or 2 is provided with a magnet. Alternatively, the substrate layer 12 or 22 is provided with a magnet, and the conveying means is provided with a magnetic material, or both substrate layer 12 or 22 and conveying means are provided with magnets. In this manner, the image sheet 1 or 2 is adhered to the surface of the conveying means by magnetic attraction and conveyed by the conveying means.

When the surface of the conveying means, such as an endless belt or a drum, is provided with a magnetic material, a magnetic material layer comprising a binder and magnetic particles dispersed therein may be formed on the surface of the conveying means or a thin magnetic film may be formed thereon.

The magnet may be a permanent magnet obtained by magnetizing a ferromagnetic material having a large coercive force or an electromagnet having a small coercive force but capable of being temporarily excited. Therefore, the magnet can be obtained by forming a layer of a magnetizable or excitable magnetic material on the surface of the conveying means or on the substrate layer side of the image sheet and magnetizing or exciting the magnetic material layer.

When a magnetic material or a magnet is provided on the surface of the conveying means, it need not be positioned over the entire surface of the conveying means. Thus, the magnetic material or the magnet may be positioned at least partially on the surface of the conveying means at intervals necessary for the magnetic material or the magnet to hold the image sheet. Further, the magnetic material of the magnet of the image sheet may be positioned at least partially in the same manner as described above. At any rate, the magnetic material or the magnet should be positioned on the image sheet side and the conveying means side in such a manner that the image sheet can be certainly adhered to the conveying means by magnetic attraction therebetween and conveyed by the conveying means.

In the present invention, since either one of the image sheet and the conveying means is provided with a magnet and the other thereof is provided with a magnetic material or a magnet, the image sheet is adhered to the conveying means by magnetic attraction acting therebetween and conveyed by the conveying means. Accordingly, the image sheet can be conveyed vertically or with the surface thereof facing down along the lower side of the conveying means without the sheet surface contacting any part of the conveying system.

Figure 3 shows the condition of vertically conveying the image sheet by use of an endless belt. In Figure 3, an endless belt 3 is vertically installed around rollers 4 and 5 which are positioned one above the other. An image sheet 6 is vertically conveyed on the surface of the endless belt 3 with a surface 6a of the image sheet 6 facing out. In this manner, the image sheet 6 can be conveyed from a lower position to a higher position without the surface 6a coming into contact any part of the conveying system. In this method, since the number of rollers, guide plates or the like can be reduced compared with the conventional vertical conveying method using rollers opposed to each other for holding the image sheet, the construction of the conveying system can be simplified greatly and the apparatus can be made compact.

Figure 4 shows the condition of conveying the image sheet with the surface thereof facing down along the lower side of the conveying means. In Figure 4, the image sheet 6 is adhered to a portion of the lower side 7a of an endless belt 7 with the surface 6a of the image sheet 6 facing down, and conveyed horizontally. This method is advantageous in that a light source for emitting light onto the image sheet can be positioned below the conveying means 7 or in the lower section of the apparatus, and the apparatus can be designed more freely as desired.

Figure 5 shows a portion of a conveying system for feeding an image sheet 10 between two apparatus 8 and 9. In the conventional method, a sheet was delivered by using holding rollers. However, in the embodiment shown in Figure 5, since a large conveying force is obtained by magnetic attraction, it is not necessary to use holding rollers, and the image sheet 10 can be fed from the apparatus 8 to the apparatus 9 without scratching the surface of the image sheet 10 or deteriorating it by a pressing force. The embodiment of Figure 5 is advantageous particularly when the distance between a feed roller 8b of the apparatus 8 on the feeding side and a receiving roller 9b of the apparatus 9 on the receiving side is half or more of the length of the image sheet 10. In Figure 5, the reference character 8a designates a feed guide plate on the side of the apparatus 8, and the reference character 9a denotes a receiving guide plate on the side of the apparatus 9. When the image sheet 10 is sufficiently rigid and the distance between the feed roller 8b and the receiving roller 9b is small, the guide plates 8a and 9a may be omitted. Further, when the image sheet 10 is greatly rigid and large magnetic attraction acts between the image sheet 10 and the conveying means, the guide plates 8a and 9a are unnecessary even if the feed roller 8b and the receiving roller 9b are spaced far apart from each other. When the image sheet 10 is not so rigid and large magnetic attraction acts between the image sheet 10 and the conveying means, there is a greater necessity for installing the guide plate 8a of the apparatus 8 on the feed side so that the image sheet 10 will not become entangled along the feed roller 8b.

**Claims**

1. A method for conveying an image sheet, wherein a conveying means for conveying said image sheet is at least partially provided with a magnetic material or a magnet, characterized in that the image sheet comprises a substrate layer and an image recording layer formed on the substrate layer, that at least a part of the substrate layer and at least a part of the conveying means are magnetically attracted to each other during conveying of the image sheet, and that the substrate layer is a magnetic material layer comprising a non-magnetic material and magnetic particles dispersed therein.

2. A method as defined in claim 1, wherein said conveying means is an endless belt.

3. A method as defined in claim 1 or 2, wherein said image recording layer is a stimulable phosphor layer.

**Patentansprüche**

1. Verfahren zum Fördern eines bildinformationtragenden Bogens, bei dem eine Fördereinrichtung zum Fördern des Bogens zumindest teilweise mit einem magnetischen Material oder einem Magneten ausgestattet ist, dadurch gekennzeichnet, daß der Bogen eine Substratschicht und eine Bildaufzeichnungsschicht auf der Substratschicht aufweist, daß zumindest ein Teil der Substratschicht und zumindest ein Teil der Fördereinrichtung während des Transports des Bogens magnetisch gegeneinander angezogen werden, und daß die Substratschicht eine Schicht aus magnetischem Material ist, welches ein nichtmagnetisches Material und darin dispergierte magnetische Partikel umfaßt.

2. Verfahren nach Anspruch 1, dadurch gekennzeichnet, daß die Fördereinrichtung ein Endlosband ist.

3. Verfahren nach Anspruch 1 oder 2, dadurch gekennzeichnet, daß die Bildaufzeichnungsschicht eine anregbare Leuchtstoffschicht ist.

**Revendications**

1. Un procédé pour transporter une feuille à image, dans lequel un moyen de transport servant à transporter ladite feuille à image est pourvu au moins partiellement d'une matière magnétique ou d'un aimant, caractérisé en ce que la feuille à image comprend une couche de substrat et une couche d'enregistrement d'image formée sur la couche de substrat, en ce qu'au moins une partie de la couche de substrat et au moins une partie du moyen de transport sont magnétiquement attirés l'un par l'autre pendant le transport de la feuille à image et en ce que la couche de substrat est une couche de matière magnétique comprenant une matière non magnétique dans laquelle sont dispersées des particules magnétiques.

2. Un procédé tel que défini dans la revendication 1, dans lequel ledit moyen de transport est une bande sans fin.

3. Un procédé tel que défini dans la revendication 1 ou 2, dans lequel ladite couche d'enregistrement d'image est une couche de substance luminescente excitable.

# F I G . I

# F I G . 2

# F I G . 4

# F I G . 3

# F I G . 5

1